# EUROPEAN PATENT SPECIFICATION

(11) **EP 3 948 762 B1**
(45) Date of publication and mention of the grant of the patent: **24.12.2025**
(21) Application number: 19720488.6
(22) Date of filing: 17.04.2019
(51) Int. Cl.: G06T 1/60, G06F 12/0862

(54) **AN ELECTRONIC DEVICE AND A METHOD OF OPERATING SUCH THE ELECTRONIC DEVICE**
ELEKTRONISCHE VORRICHTUNG UND VERFAHREN ZUM BETRIEB SOLCH EINER ELEKTRONISCHEN VORRICHTUNG
DISPOSITIF ÉLECTRONIQUE ET PROCÉDÉ DE FONCTIONNEMENT D'UN TEL DISPOSITIF ÉLECTRONIQUE

(43) Date of publication of application: 09.02.2022
(73) Proprietor: Huawei Technologies Co., Ltd., Shenzhen, Guangdong 518129 (CN)
(72) Inventor: IONITA, Mihai, Shenzhen, Guangdong 518129 (CN); BADI, Eric, Shenzhen, Guangdong 518129 (CN)
(74) Representative: Pfenning, Meinig & Partner mbB
(86) International application number: PCT/EP2019/059918
(87) International publication number: WO 2020/211935

(56) References cited:
- US-B1- 6 801 203
- LARABI Z ET AL: "Efficient Data Access Management for FPGA-Based Image Processing SoCs", RAPID SYSTEM PROTOTYPING, 2009. RSP '09. IEEE/IFIP INTERNATIONAL SYMPOSIUM ON, IEEE, PISCATAWAY, NJ, USA, 23 June 2009 (2009-06-23), pages 159 - 165, XP031485609, ISBN: 978-0-7695-3690-3
- NESBIT K J ET AL: "Data Cache Prefetching Using a Global History Buffer", IEEE MICRO, IEEE SERVICE CENTER, LOS ALAMITOS, CA, US, vol. 25, no. 1, January 2005 (2005-01-01), pages 90 - 97, XP011128719, ISSN: 0272-1732, DOI: 10.1109/MM.2005.6
- JUNHEE PARK ET AL: "Lens distortion correction using ideal image coordinates", IEEE TRANSACTIONS ON CONSUMER ELECTRONICS, IEEE SERVICE CENTER, NEW YORK, NY, US, vol. 55, no. 3, August 2009 (2009-08-01), pages 987 - 991, XP011277853, ISSN: 0098-3063, DOI: 10.1109/TCE.2009.5278053

## Description

### TECHNICAL FIELD

In general, the present disclosure relates to the field of electronic devices having image processing capabilities. More specifically, the present disclosure relates to an electronic image processing device having a main memory and a cache memory, a method of operating such the device, a computer program, and a computer readable storage medium.

### BACKGROUND

Many modern electronic devices, such as smartphones, are capable of capturing and processing electronic images or videos, such as by means of a camera and an image signal processor (ISP), which are often implemented as a System on a Chip (SoC). The ISP can process an electronic image obtained by the camera in order to compensate, i.e. reduce or remove image distortions caused, for instance, by the camera itself, such as the rolling shutter effect, or by a movement of the camera, while capturing the image. Because of high camera resolution, these electronic images are usually very large so that the image processor can only process respective portions of the image stored in a local cache memory one after the other, while the whole image is stored in a main memory with a high latency, in particular a DRAM of the electronic device.

For an efficient processing of an image it is desirable to minimize the accesses of the ISP to the main memory for obtaining pixels from the main memory not stored in the cache memory. In the prior art, three basic approaches for managing the cache memory of an ISP are known, namely directly mapped, fully associative or set associative. The directly mapped approach is very costly as it is required to store as many input image full lines as the image distortion performed by the ISP needs for building a single output line. The fully associative approach allows to decrease the amount of the local cache memory as it is possible to store only what is needed of the input image to generate one output line. However, the fully associative cache implementation needs to store the address of each data block and implement a logic address matching to detect if the data is present in the cache memory, which can become very inefficient for a large number of addresses. In addition, the necessary replacement policies, such as LRU, round robin and the like, lead to a further performance decrease. The set associative approach is based on the idea to decrease the number of addresses to be compared. This approach, however, has the drawback that the local cache memory size is increased.

In electronic devices having a DRAM as a main memory and a local cache memory there have been some attempts using speculative DRAM accesses implemented, for instance, by a data pre-fetch unit to hide the DRAM latency, i.e. the time or number of clock cycles necessary to obtain data from the DRAM not available in the local cache memory. Speculative DRAM accesses implement a fill strategy of the cache memory that anticipates upcoming DRAM data accesses based on previous DRAM data accesses.

However, the DRAM accesses often do not follow well-defined statistical laws and, therefore, it is very difficult to predict future image pixels from the DRAM required for further processing on the basis of previously processed image pixels retrieved from the DRAM making speculative DRAM access schemes often rather inefficient. Thus, although in certain cases the speculative approach allows to fetch the correct data from the DRAM, it is inefficient with respect to the bandwidth consumed, as sometimes the data fetch is not used because the prediction is wrong. The other drawback of the speculative approach is that it does not provide the certitude that the full DRAM latency can be hidden because the data pre-fetch is only correlated to past accesses and does not take into account the future accesses and when the data fetch will be used by a processing unit of the electronic device.

Thus, there is a need for an improved electronic device having image processing capabilities, which allows hiding the DRAM latency in an efficient manner, as well as for a corresponding method.

LARABI Z et al: "Efficient Data Access Management for FPGA-Based Image Processing SoCs" XP 031485609 discloses that by analyzing the accessed pixel addresses, the cache predicts the n-Dimension block of memory elements to prefetch, and by prefetching the element to be used by the processing unit, the n-Dimension block elements of the main memory are copied in the cache memory.

NESBIT K J et al: "Data Cache Prefetching Using a Global History Buffer" XP011128719 disclose that a fixed-length FIFO table as the global history buffer (GHB) holds cache miss addresses, automatically reducing the amount of stale address history.

### SUMMARY

It is an object of the invention to provide for an improved electronic device.

The invention is set out in the appended set of claims. The foregoing and other objects are achieved by the subject matter of the independent claims. Further implementation forms are apparent from the dependent claims, the description and the figures.

According to a first aspect, the invention relates to an electronic device comprising a main memory, in particular a DRAM, for storing a current image, wherein the current image comprises a plurality of pixels, including a plurality of support pixels. Moreover, the electronic device comprises a cache memory for storing a subset of the plurality of pixels stored in the main memory. Moreover, the electronic device comprises a processing circuitry configured to successively generate a respective pixel value at a plurality of pixel positions of a processed (a distortion-compensated) image. The processing circuitry is configured to pre-fetch from the main memory the pixel values of the plurality of pixels of the current image to the cache memory. Moreover, the electronic device comprises a buffer memory configured to store a first of the plurality of pixel positions and to accumulate further pixel positions of the plurality of pixel positions, in parallel to pre-fetching the pixel values to the cache memory. The processing circuitry is further configured to retrieve the pixel values from the cache memory and/or the main memory based on at least one of a first of the plurality of pixel positions and the accumulated further pixel positions for generating the respective pixel value at the first of the plurality of pixel positions.

Thus, an improved electronic device having image processing capabilities is provided allowing to hide the latency of the main memory. More specifically, the buffer memory can be advantageously used because of the following reasons. The location of the pixels to fetch is usually not predictable. In case of a miss in the cache memory, it is necessary to fetch the pixels from the main memory having high latency. Advantageously the buffer memory implemented in embodiments of the invention allows to continue generating pixel values and/or positions, while waiting for the precedent pixel to come back from the main memory. According to embodiments of the invention the size of the buffer memory can be chosen on the basis of an estimation of the main memory roundtrip time.

The processing circuitry is configured to check whether the pixel values for generating the respective pixel value at the first of the plurality of pixel positions can be retrieved from the cache memory and, if said pixel values for generating the respective pixel value at the first of the plurality of pixel positions cannot be retrieved from the cache memory, to retrieve the pixel values for generating the respective pixel value at the first of the plurality of pixel positions from the main memory.

The buffer memory is configured to accumulate the further pixel positions of the plurality of pixel positions, until the pixel values for generating the respective pixel value at the first of the plurality of pixel positions have been stored in the cache memory.

According to a further possible implementation form of the first aspect, the buffer memory is configured to provide the first pixel position and the further pixel positions accumulated by the buffer memory to the processing circuitry, once the values for generating the respective pixel value at the first of the plurality of pixel positions have been stored in the cache memory.

According to a further possible implementation form of the first aspect, the electronic device comprises a further buffer memory configured to store the pixel values pre-fetched from the main memory, wherein the processing circuitry is configured to check whether a pixel value pre-fetched from the main memory is in the further buffer memory or the cache memory.

According to a further possible implementation form of the first aspect, the processing circuitry is configured to transfer content, in particular a line of the further buffer memory to the cache memory, if the pre-fetched pixel value is in the further buffer memory. The content, i.e. the line of the further buffer memory includes the pixel requested from the main memory.

According to a further possible implementation form of the first aspect, the cache memory and the further buffer memory are logical memories implemented on a physical memory, wherein the processing circuitry is configured to access the cache memory and the further buffer memory using pointers and to transfer the content of the further buffer memory to the cache memory by exchanging pointers.

According to a further possible implementation form of the first aspect, the plurality of pixels included in the current image include a plurality of support pixels, the processed image is a distortion compensated image and the respective pixels are generated on the basis of an image distortion model by interpolating pixel values of the plurality of pixels of the current image, wherein the image distortion model defines for each of the plurality of support pixels a mapping between a position in the current image and a position in the distortion-compensated image; and a current full-integer pixel in the current image lies within a global cell defined by a plurality of current support pixels in the current image and the processing circuitry is configured to generate a corresponding current sub-integer pixel in the distortion-compensated image by: (i) determining the respective sub-integer positions of the plurality of current support pixels in the current image; and (ii) determining the sub-integer position of the corresponding current pixel in the distortion-compensated image on the basis of the image distortion model and the respective sub-integer positions of the plurality of current support pixels in the current image.

According to a further possible implementation form of the first aspect, the processing circuitry is configured to determine the sub-integer position of the corresponding current pixel in the distortion-compensated image on the basis of the image distortion model and the respective sub-integer positions of the plurality of current support pixels in the current image and the image distortion model using interpolation, in particular bi-linear interpolation.

According to a further possible implementation form of the first aspect, the processing circuitry is configured to successively generate the pixel value of a current full-integer pixel in the distortion-compensated image by: (i) determining the sub-integer positions of a plurality of neighboring interpolation pixels in the distortion-compensated image on the basis of the image distortion model, wherein the plurality of neighboring sub-integer interpolation pixels in the distortion-compensated image define a respective local cell and wherein the current full-integer pixel in the distortion-compensated image is located in the local cell; and (ii) determining the pixel value of the current full-integer pixel in the distortion-compensated image on the basis of the pixel values and the sub-integer positions of the plurality of neighboring sub-integer interpolation pixels in the distortion-compensated image.

According to a further possible implementation form of the first aspect, the processing circuitry is configured to determine the pixel value of the current full-integer pixel in the distortion-compensated image on the basis of the pixel values and the sub-integer positions of the plurality of neighboring sub-integer interpolation pixels in the distortion-compensated image using interpolation, in particular bi-linear interpolation.

According to a further possible implementation form of the first aspect, the electronic device further comprises an image capturing device, in particular a camera for obtaining the current image.

According to a second aspect, the invention relates to a corresponding method of operating an electronic device. The method comprises the steps of: storing a current image in a main memory of the electronic device, wherein the current image comprises a plurality of pixels; storing a subset of the plurality of pixels stored in the main memory in a cache memory of the electronic device; successively generating a respective pixel value at a plurality of pixel positions of a processed (a distortion-compensated) image; pre-fetching from the main memory the pixel values of the plurality of pixels of the current image to the cache memory; storing a first of the plurality of pixel positions and accumulating further pixel positions of the plurality of pixel positions in a buffer memory, in parallel to pre-fetching the pixel values to the cache memory; and
retrieving the pixel values from the cache memory and/or the main memory based on at least one of a first of the plurality of pixel positions and the accumulated further pixel positions for generating the respective pixel value at the first of the plurality of pixel positions.

Thus, an improved method of operating an electronic device having image processing capabilities is provided allowing to hide the latency of the main memory.

The method according to the second aspect of the invention can be performed by the electronic device according to the first aspect of the invention. Further features of the method according to the second aspect of the invention result directly from the functionality of the electronic device according to the first aspect of the invention and its different implementation forms described above and below.

According to a third aspect, the invention relates to a computer program with a program code for performing a method according to the second aspect of the invention when the computer program runs on a computer.

According to a fourth aspect, the invention relates to a computer readable storage medium comprising computer program code instructions, being executable by a computer, for performing a method according to the second aspect of the invention when the computer program code instructions run on a computer.

Embodiments of the invention can be implemented in hardware, in software or in a combination of hardware and software.

Details of one or more embodiments are set forth in the accompanying drawings and the description below. Other features, objects, and advantages will be apparent from the description, drawings, and claims.

### BRIEF DESCRIPTION OF THE DRAWINGS

In the following embodiments of the invention are described in more detail with reference to the attached figures and drawings, in which:
Fig. 1 is a schematic diagram illustrating the architecture of an electronic device according to an embodiment of the invention;
Fig. 2 is a schematic diagram illustrating a current image, the distortion-compensated current image and a plurality of support pixels defining a support grid as used by an electronic device according to an embodiment of the invention;
Fig. 3 is a schematic diagram illustrating a current image, a portion of the distortion-compensated current image and a plurality of interpolations pixels used for generating the distortion-compensated current image as implemented by an electronic device according to an embodiment of the invention;
Fig. 4 is a schematic diagram illustrating in more detail components of an electronic device according to an embodiment of the invention;
Fig. 5 is a schematic diagram illustrating further details of several processing steps implemented by and several components of an electronic device according to an embodiment of the invention; and
Fig. 6 is a schematic diagram illustrating exemplary lines of a cache memory and a return buffer memory as implemented by an electronic device according to an embodiment of the invention.

In the following identical reference signs refer to identical or at least functionally equivalent features.

### DETAILED DESCRIPTION OF THE EMBODIMENTS

In the following description, reference is made to the accompanying figures, which form part of the disclosure, and which show, by way of illustration, specific aspects of embodiments of the invention or specific aspects in which embodiments of the present invention may be used. It is understood that embodiments of the invention may be used in other aspects and comprise structural or logical changes not depicted in the figures. The following detailed description, therefore, is not to be taken in a limiting sense, and the scope of the present invention is defined by the appended claims.

For instance, it is understood that a disclosure in connection with a described method may also hold true for a corresponding device or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary embodiments and/or aspects described herein may be combined with each other, unless specifically noted otherwise.

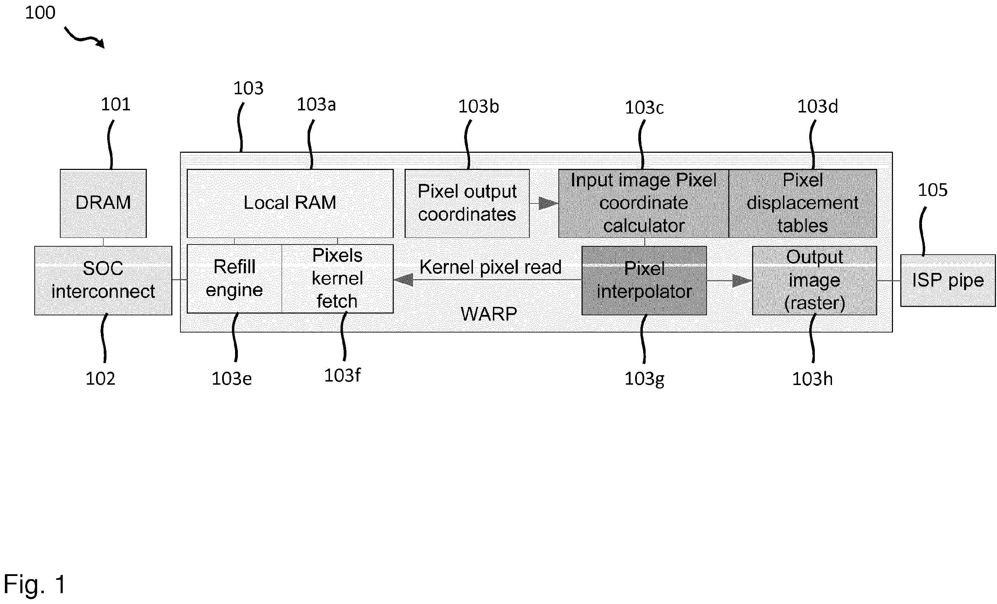

Figure 1 is a schematic diagram showing the architecture of an electronic device 100 configured to process a current image into a processed image (a distortion-compensated image). According to an embodiment, the electronic device 100 is a smartphone, a laptop, a tablet or the like and can comprise an image capturing device, in particular a camera for capturing the current image. According to a further embodiment, the electronic device 100 may comprise a communication interface configured to receive the current image, for instance, from an application server. The current image can be a single image or one of a plurality of images, for instance, an image of a video frame.

As illustrated in figure 1, the electronic device 100 comprises a main memory 101, in particular a DRAM 101 for storing the current image. The current image comprises a plurality of pixels including a plurality of support pixels defining a support grid of pixels, as will be described in more detail below.

Moreover, the electronic device 100 comprises a fast-access i.e. low latency, local cache memory 103a (referred to as local RAM 103a in figure 1) for storing, i.e. caching a subset of the plurality of pixels stored in the main memory 101. According to an embodiment, the local RAM 103a is configured to store a plurality of non-overlapping, rectangular portions of the current image in a corresponding plurality of sectors thereof, wherein each sector comprises a subset of the plurality of pixels stored in the main memory 101.

Furthermore, the electronic device 100 comprises processing circuitry configured to successively generate a respective pixel value at a plurality of pixel positions of the processed (the distortion-compensated) image on the basis of the current image. For simplicity the disclosure will refer in the following to a processing for obtaining a distortion compensated image using an image distortion mode. However, the general principles of this disclosure are not limited to distortion compensated images and can be applied to any type of image processing. For example, the respective pixel value at a plurality of pixel positions of a processed image may be generated on the basis of the current image using an image distortion model by interpolating pixel values and/or positions of respective pixels of the plurality of pixels of the current image stored in the corresponding plurality of sectors of the cache memory 103a so that for generating the distortion-compensated image there is no or only minimal access of the DRAM 101 necessary. In the embodiment shown in figure 1, the main memory, in particular DRAM 101 is connected with a WARP unit 103 by means of an SOC interconnect 102. As illustrated in figure 1, the local cache memory 103a and/or the processing circuitry can be implemented as a component of the WARP unit 103.

In the embodiment shown in figure 1, the processing circuitry implemented as part of the WARP unit 103 comprises several components, whose function will be described in more detail in the following. An "Input image Pixel coordinate calculator" 103c can be configured to provide sub-integer pixel positions/coordinates in the distortion-compensated image on the basis of full-integer pixel positions/coordinates 103b in the current image making use of or providing pixel displacement tables 103d, which reflect the image distortion model. A refill engine 103e and a pixels kernel fetch unit 103f can be configured to manage the accesses to the main memory, in particular DRAM 101 and/or the local cache memory 103a, in particular to check whether any required pixels are available in the local cache memory 103a or have to be requested from the main memory 101, as will be described in more detail further below. A pixel interpolator 103g can be configured to provide the pixel values of full-integer pixels in the current image on the basis of the data retrieved from the local cache memory 103a and/or the main memory 101 for providing the final output image 103h, which can be further processed by an ISP pipeline 105. The ISP pipeline 105 can implement further image processing steps, such as noise filtering, color correction, and the like, organized is series that implement an image processing chain with a higher performance and a lower power consumption than a CPU/GPU.

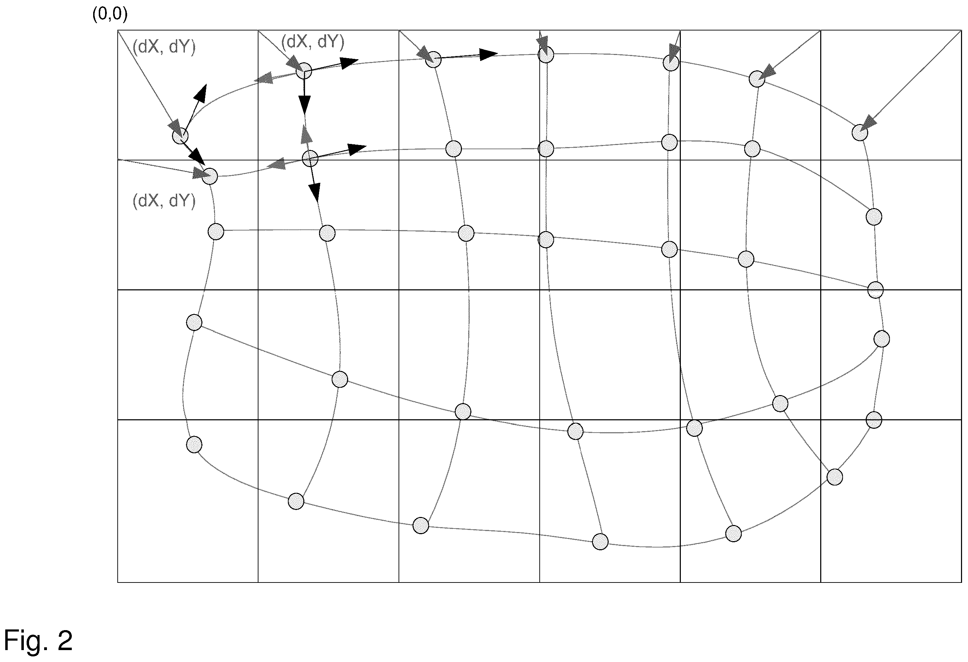

As will be described in more detail in the context of figure 2, the image distortion model defines for each of the plurality of support pixels a mapping between a position in the current image and a corresponding position in the distortion-compensated image. In the distortion-compensated image the plurality of support pixels define a regular grid of pixels comprising a plurality of horizontal rows of pixels and a plurality of vertical columns of pixels. According to an embodiment, the image distortion model is configured to compensate one or more distortions caused by image rotations, such as image rotations caused by a movement of a camera, and/or image deformations, such as image deformations caused by the rolling shutter effect.

According to an embodiment, the processing circuitry of the electronic device 100 is configured to generate the output image, i.e. the distortion-compensated image in raster order to communicate with the next ISP processing stage 105 without having to pass through the DRAM 101. To this end, according to an embodiment, the size of the local cache memory 103a is chosen such that the local cache memory 103a can store enough image data to ensure the production of a full output line. According to an embodiment, the local cache memory 103a is organized to store only small portions of the current image (herein referred to as sectors) used for creating the output image (similar to the fully associative approach described above) but the image data is organized in such a way that it can be retrieved from the cache sectors using simple calculations instead of massive comparisons (as in the case of the fully associative approach). According to further embodiments, the selection/replacement policy may also by optimized to avoid evicting data that will be used.

As can be taken from figure 2, which illustrates the grid of support pixels in the current image and the grid of support pixels in the distortion-compensated image, each of the plurality of horizontal rows or lines of pixels defined by the grid of support pixels in the distortion-compensated image defines a respective substantially horizontal, but possibly curved line of pixels in the current image. Likewise, each of the plurality of vertical columns of pixels defined by the grid of support pixels in the distortion-compensated image defines a respective substantially vertical, but possibly curved line of pixels in the current image. The exemplary grid of support pixels shown in figure 2 could have, for instance, 27x21 grid nodes, i.e. support pixels, wherein each grid node is associated with a dx and dy displacement, i.e. a mapping from its position in the current image to its position in the distortion-compensated image, as illustrated in figure 2.

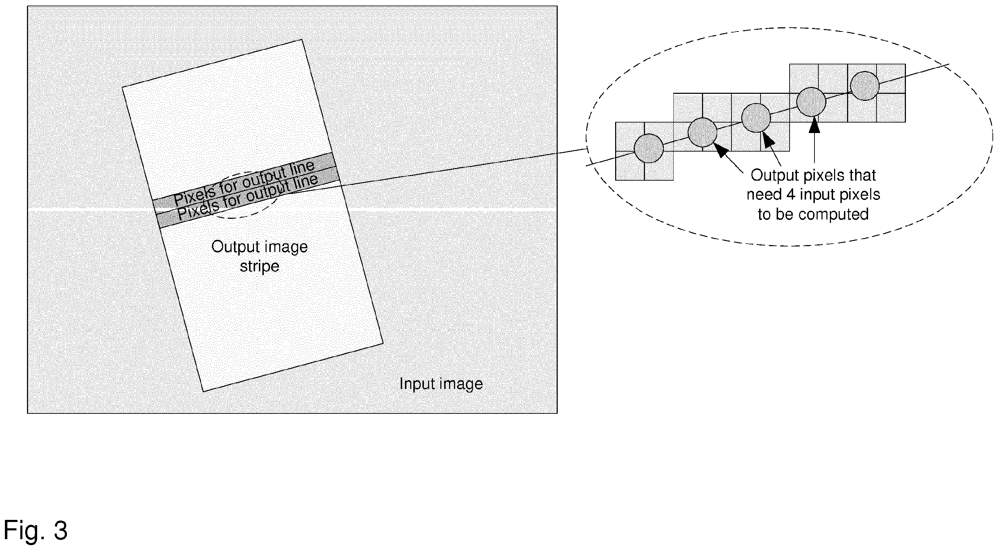

As can be taken from figure 3, according to an embodiment the processing circuitry of the electronic device 100 is configured to select the plurality of portions of the current image for storing in the corresponding plurality of sectors of the cache memory 103a such that the plurality of sectors further comprises, i.e. covers one or more pixels of the current image, which are vertically and/or horizontally neighboring pixels of the at least one respective line of pixels in the current image.

As illustrated in figures 2 and 3, a current full-integer pixel in the current image generally lies within a global cell defined by a plurality of, in particular four current support pixels in the current image defining a plurality of, in particular four corners of the cell. According to an embodiment of the invention, the processing circuitry, in particular the "Input image Pixel coordinate calculator" 103c shown in figure 1 of the electronic device 00 is configured to generate the corresponding current sub-integer pixel in the distortion-compensated image on the basis of the plurality of pixels stored in the cache memory 103a and/or the main memory 101 by: (i) determining the respective positions of the plurality of, in particular four current support pixels in the current image, which are generally sub-integer positions; and (ii) determining the sub-integer position of the corresponding current pixel in the distortion-compensated image on the basis of the image distortion model and the respective sub-integer positions of the plurality of, in particular four current support pixels in the current image. As will be appreciated, a full-integer or sub-integer pixel position can be identified, for instance, by a pair of horizontal (x) and vertical (y) coordinates. According to an embodiment, the processing circuitry of the electronic device 100 may be configured to determine the sub-integer position of the corresponding current pixel in the distortion-compensated image on the basis of the image distortion model and the respective sub-integer positions of the plurality of, in particular four current support pixels in the current image using interpolation, in particular bi-linear interpolation. The current sub-integer pixel in the distortion-compensated image can be assigned the same pixel value as the corresponding full-integer pixel in the current image. In an embodiment, the processing circuitry of the electronic device 100 is configured to repeat this process for all full-integer pixels of the current image.

According to a further embodiment, the processing circuitry, in particular the pixel interpolator 103g shown in figure 1 of the electronic device 100 may be further configured to determine the pixel value of a current full-integer pixel in the distortion-compensated image on the basis of the plurality of pixels stored in the cache memory 103a and/or the main memory 101 by: (i) determining, as described above, the sub-integer positions and pixels values of a plurality of, in particular four neighboring sub-integer interpolation pixels in the distortion-compensated image on the basis of the image distortion model, wherein the plurality of neighboring interpolation pixels in the distortion-compensated image define a respective local cell and wherein the current full-integer pixel in the distortion-compensated image is located in the local cell; and (ii) determining the pixel value of the current full-integer pixel in the distortion-compensated image on the basis of the pixel values and the sub-integer positions of the plurality of neighboring sub-integer interpolation pixels in the distortion-compensated image. According to an embodiment, the processing circuitry of the electronic device 100 is configured to determine the pixel value of the current full-integer pixel in the distortion-compensated image on the basis of the pixel values and the sub-integer positions of the plurality of, in particular four neighboring sub-integer interpolation pixels in the distortion-compensated image using interpolation, in particular bi-linear interpolation.

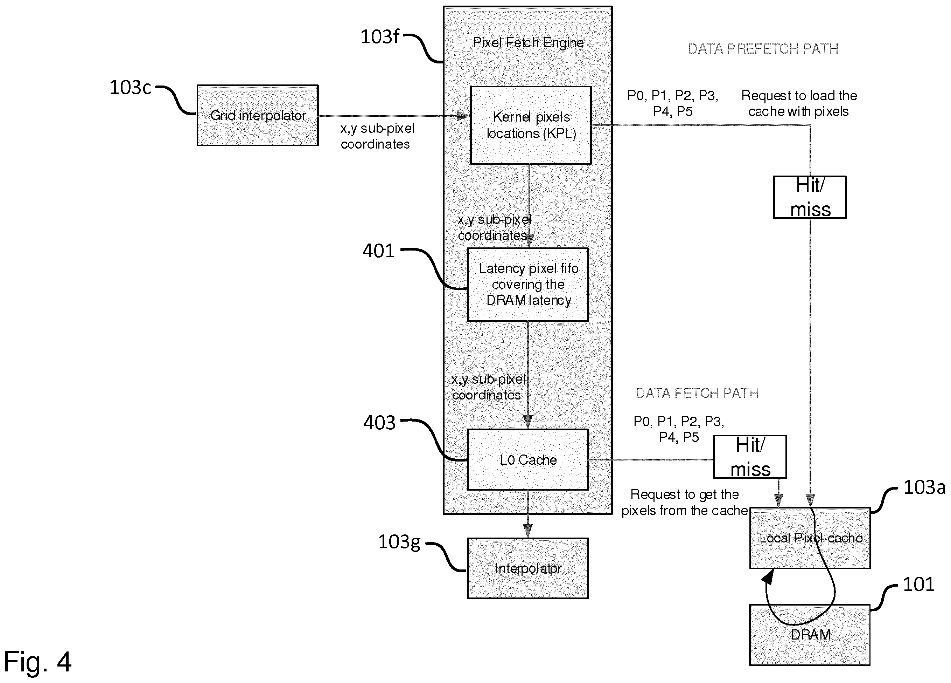

Figure 4 is a schematic diagram illustrating in more detail components of the electronic device 100 according to an embodiment of the invention. The electronic device 100 further comprises a buffer memory 401 (referred to as latency pixel fifo in figure 4). As illustrated in figure 4, the buffer memory 401 can be implemented as a component of the pixel fetch engine 103f of the WARP unit 103 of the electronic device 100 of figure 1. According to a further embodiment, the buffer memory 401 can be implemented separately from the pixel fetch engine 103f.

As already described above, the processing circuitry of the electronic device 100 is configured to successively generate a respective pixel value at a plurality of pixel positions of the distortion-compensated image on the basis of the image distortion model by interpolating pixel values and/or positions of respective pixels of the plurality of pixels of the current image. Moreover, as illustrated in figure 4, the processing circuitry, in particular the pixel fetch engine 103f is configured in a data pre-fetch phase (i.e. via the data pre-fetch path shown in figure 4) to request from the main memory 101 to store the pixel values and/or positions of the respective pixels of the plurality of pixels of the current image in the cache memory 103a. As will be described in more detail below, the buffer memory, i.e. latency pixel fifo 401 of the electronic device 100 is configured to store a first of the plurality of pixel positions and to accumulate further pixel positions of the plurality of pixel positions, in parallel to the pending request by the pixel fetch engine 103f to the main memory 101 to store the pixel values and/or positions of the respective pixels of the plurality of pixels of the current image in the cache memory 103a. Thus, the buffer memory 410 is capable of fully hiding the latency of the main memory 101 as well as the interconnect 102 by storing the pixel coordinates as long as the data request process to the main memory 101 as well as the data return process from the main memory 101 is not completed yet. Thus, according to an embodiment, the buffer memory 401 of the electronic device 100 is configured to accumulate the further pixel positions of the plurality of pixel positions, until the pixel values and/or positions of the respective pixels of the plurality of pixels of the current image for generating the respective pixel value at the first of the plurality of pixel positions have been stored in the cache memory 103a.

As already described above, each output pixel (i.e. each pixel of the distortion compensated image) can be computed by an interpolation of several input image pixels (i.e. several pixels of the current image). According to an embodiment, the data pre-fetch accesses illustrated in figure 4 are triggered at each input image pixel coordinates computation (provided by the "grid interpolator" 103c, which can compute the location of the pixel in the current image to build the current output pixel). According to an embodiment, the pixels can be grouped together in a kernel before they are provided to the data pre-fetch path, as illustrated in figure 4. According to an embodiment, the pixel fetch engine 103f is configured to determine the memory addresses of these kernel pixels, as illustrated by the "kernel pixels locations (KPL)" block shown in figure 4. Usually, the main memory addresses of between 4 and 6 pixels of the current image are required for determining a current pixel of the distortion-compensated image. As, in practice, the data pre-fetch path can take up to 1 µs to complete, the input image pixel coordinates are stored in the buffer memory 401, while the data pre-fetch request is not completed. This enables to do not stall the generation of pixel coordinates from the grid interpolator 103c, as long as the maximum delay of the buffer memory 401 is able to cover the read latency of the main memory.

In an embodiment, the processing circuitry of the electronic device 100 is further configured in a data fetch phase (i.e. via the data fetch path shown in figure 4) to retrieve the pixel values and/or positions of the respective pixels of the plurality of pixels of the current image from the cache memory 103a and/or the main memory 101 for generating the respective pixel value at the first of the plurality of pixel positions. As illustrated by a first "hit/miss" block shown in figure 4, according to an embodiment the processing circuitry of the electronic device 100 is configured to check whether the pixel values and/or positions of the respective pixels of the plurality of pixels of the current image for generating the respective pixel value at the first of the plurality of pixel positions can be retrieved from the cache memory 103a and, if this is not the case, i.e. if the pixel values and/or positions of the respective pixels of the plurality of pixels of the current image for generating the respective pixel value at the first of the plurality of pixel positions cannot be retrieved from the cache memory 103a, to retrieve the pixel values and/or positions of the respective pixels of the plurality of pixels of the current image for generating the respective pixel value at the first of the plurality of pixel positions from the main memory 101. A further similar "hit/miss" block can be implemented in the data pre-fetch path allowing the processing circuitry of the electronic device whether the requested pixel values and/or positions of the respective pixels of the plurality of pixels of the current image are already stored in the cache memory 103a.

Thus, the data fetch patch shown in figure 4 fetches the pixels needed while the coordinates of the fetched pixels are stored in the buffer memory 401. As will be described in more detail below, according to an embodiment, while the data are fetched by the data fetch path, the pixels locations are accumulating in the buffer memory, until they are used in a synchronized manner with the data fetch path return. With this architecture of the electronic device 100 according to an embodiment of the invention, only the useful data for the interpolation are pre-fetched from the main memory 101 and the latency of the main memory 101 can be fully hidden.

According to an embodiment, the buffer memory 401 of the electronic device 100 is configured to provide the first pixel position and the further pixel positions stored in the buffer memory 401 to the processing circuitry, once the values and/or positions of the respective pixels of the plurality of pixels of the current image for generating the respective pixel value at the first of the plurality of pixel positions have been stored in the cache memory 103a.

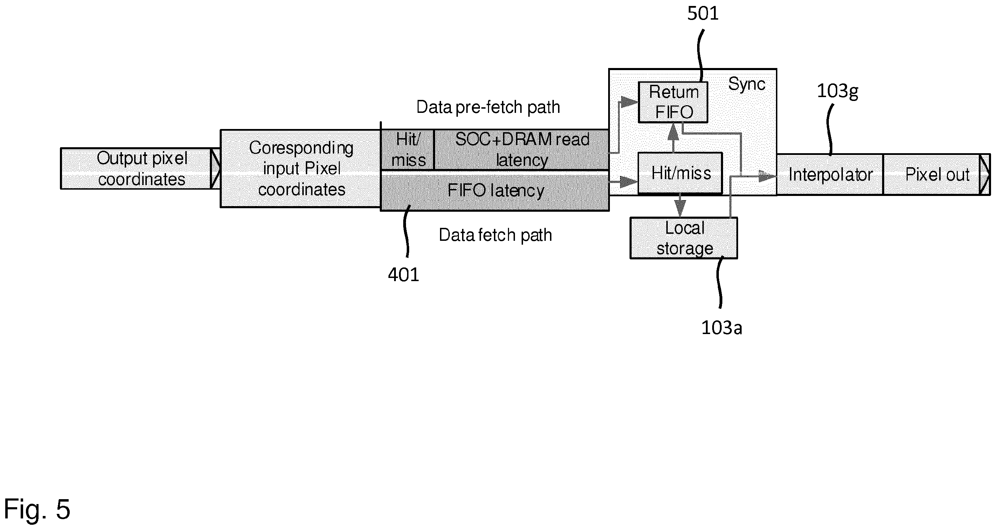

As already described above, according to an embodiment the electronic device 100 is configured to implement a synchronization scheme between the data pre-fetch path and the data fetch path that prevents the data fetched from the main memory 101 from destroying useful data stored in the cache memory 103a. This data fetch and pre-fetch path synchronization scheme will be described in the following in the context of figure 5.

Embodiments of the invention allow maintaining the content of the cache memory 103a as long as possible to be sure that the pre-fetch request data never overwrites data stored in the cache memory 103a that will be used by the pixel request stored in the buffer memory 401. To avoid re-fetching the same data from the main memory 101, embodiments of the invention provide a synchronization scheme (illustrated as "Sync" block in figure 5) that manages the refill of the cache memory 103a from the main memory 101. Thus, according to embodiments of the invention the electronic device 100 comprises a further buffer memory 501 (referred to as "Return FIFO" in figure 5) that is configured to store, i.e. accumulate the data provided by the main memory 101 via the data fetch path. According to an embodiment, the processing circuitry of the electronic device 100 is further configured to check whether a pixel requested by the data fetch path is already in the further buffer memory 501 or in the cache memory, as illustrated by the "hit/miss" block shown in figure 5. If the requested pixel is in the further buffer memory 501, then the full line that includes the pixel is transferred from the further buffer memory 501 to the cache memory. Thus, as will be appreciated, it is the pixel data fetch request and the presence of the expected data in the further buffer memory that trigger the eviction/replacement of a line in the cache memory 103a.

As will be described in the context of figure, embodiments of the invention allow a quasi-instantaneous (virtually one cycle) transfer of the data from the further buffer memory 501 to the local cache memory 103a. This makes sure that the next pixel request from the data fetch path is able to hit the head of the further buffer memory 501 without any delay.

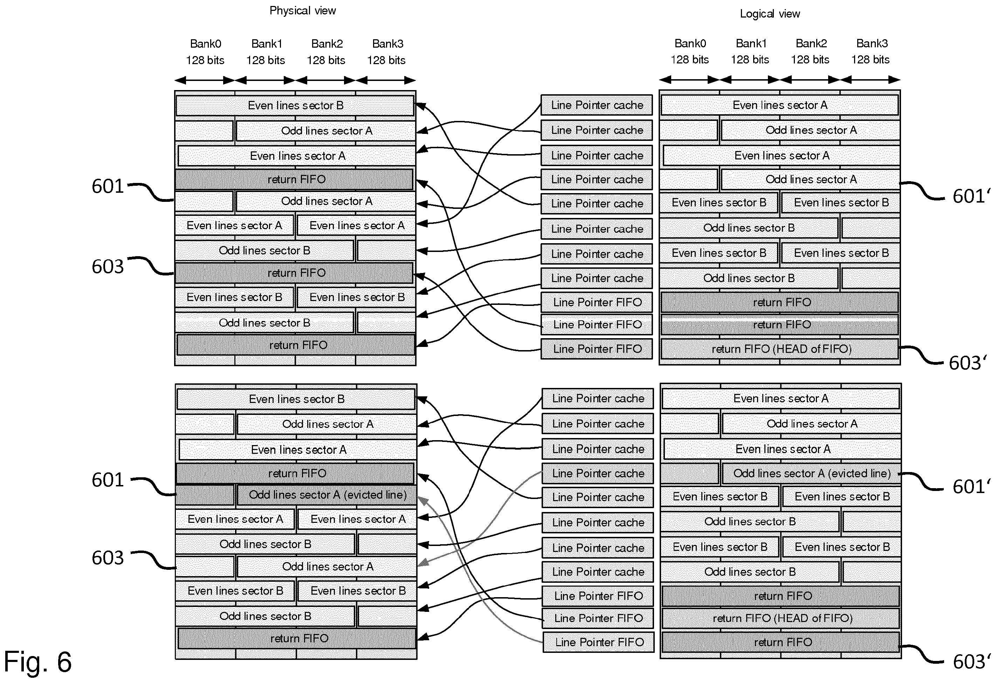

According to an embodiment, the cache memory 103a and the further buffer memory 501 are logical memories implemented on the same physical memory (illustrated in figure 6), which can be addressed by the processing circuitry using pointers, e.g. each sector line is pointed at by a pointer. According to an embodiment, the processing circuitry is configured to perform the line transfer from the further buffer memory 501 to the cache memory 103a by exchanging pointers, as illustrated in figure 6 by the lines 601, 603 for the physical view and the lines 601', 603' for the logical view. More, specifically the further buffer memory head pointer is swapped with the one of the evicted line. The FIFO head is poped. In other words, the purpose of this process is to transfer instantaneously the head of the return FIFO, i.e. the further buffer memory 501 to the cache memory 103a, i.e. the poping of the head of the return FIFO 501 and the transfer of the head of the return FIFO 501 into the cache 103a.

While a particular feature or aspect of the disclosure may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention which is defined by the appended claims.

## Claims

1. An electronic device (100) comprising:
a main memory (101) for storing a current image, wherein the current image comprises a plurality of pixels;
a cache memory (103a) for storing a subset of the plurality of pixels stored in the main memory (101);
a processing circuitry configured to successively generate a respective pixel value at a plurality of pixel positions of a distortion-compensated image on the basis of the current image and to pre-fetch from the main memory (101) the pixel values of the plurality of pixels of the current image to the cache memory (103a); and
a buffer memory (401) configured to store a first pixel position of the plurality of pixel positions of the distortion-compensated image and to accumulate further pixel positions of the plurality of pixel positions of the distortion-compensated image, in parallel to pre-fetching the pixel values of the plurality of pixels of the current image to the cache memory (103a);
wherein the processing circuitry is further configured to retrieve the pixel values of the plurality of pixels of the current image from the cache memory (103a) and/or the main memory (101) based on the first pixel position of the plurality of pixel positions of the distortion-compensated image and the accumulated further pixel positions for generating the respective pixel value at the first pixel position of the plurality of pixel positions of the distortion-compensated image,
wherein the processing circuitry is configured to:
check whether the pixel values for generating the respective pixel value at the first pixel position of the plurality of pixel positions of the distortion-compensated image can be retrieved from the cache memory (103a), and
if said pixel values for generating the respective pixel value at the first pixel position of the plurality of pixel positions of the distortion-compensated image cannot be retrieved from the cache memory (103a), to retrieve the pixel values for generating the respective pixel value at the first pixel position of the plurality of pixel positions of the distortion-compensated image from the main memory (101);
wherein the buffer memory (401) is configured to accumulate the further pixel positions of the plurality of pixel positions of the distortion-compensated image, until the pixel values for generating the respective pixel value at the first pixel position of the plurality of pixel positions of the distortion-compensated image have been stored in the cache memory (103a).

2. The electronic device (100) of claim 1, wherein the buffer memory (401) is configured to provide the first pixel position and the further pixel positions stored in the buffer memory (401) to the processing circuitry, once the values for generating the respective pixel value at the first pixel position of the plurality of pixel positions of the distortion-compensated image have been stored in the cache memory (103a).

3. The electronic device (100) of claim 1 or 2, wherein the electronic device (100) comprises a further buffer memory (501) configured to store the pixel values pre-fetched from the main memory (101) and wherein the processing circuitry is configured to check whether a pixel value pre-fetched from the main memory (101) is in the further buffer memory (501) or the cache memory (103a).

4. The electronic device (100) of claim 3, wherein the processing circuitry is configured to transfer content of the further buffer memory (501) to the cache memory (103a), if the pre-fetched pixel value is in the further buffer memory (501).

5. The electronic device (100) of claim 3 or 4, wherein
the cache memory (103a) and the further buffer memory (501) are logical memories implemented on a physical memory,
the processing circuitry is configured to
access the cache memory (103a) and the further buffer memory (501) using pointers, and
transfer the content of the further buffer memory (501) to the cache memory (103a) by exchanging pointers.

6. The electronic device (100) of any one of claims 1 to 5, wherein
the plurality of pixels included in the current image include a plurality of support pixels,
the respective pixels are generated on the basis of an image distortion model by interpolating the pixel values of the plurality of pixels of the current image, wherein the image distortion model defines for each of the plurality of support pixels a mapping between a position in the current image and a position in the distortion-compensated image; and
a current full-integer pixel in the current image lies within a global cell defined by a plurality of current support pixels in the current image and
the processing circuitry is configured to generate a corresponding current sub-integer pixel in the distortion-compensated image by:
(i) determining the respective sub-integer positions of the plurality of current support pixels in the current image; and
(ii) determining the sub-integer position of the corresponding current pixel in the distortion-compensated image on the basis of the image distortion model and the respective sub-integer positions of the plurality of current support pixels in the current image.

7. The electronic device (100) of claim 6, wherein the processing circuitry is configured to determine the sub-integer position of the corresponding current pixel in the distortion-compensated image on the basis of the image distortion model and the respective sub-integer positions of the plurality of current support pixels in the current image and the image distortion model using interpolation.

8. The electronic device (100) of claim 6 or 7, wherein the processing circuitry is configured to successively generate the pixel value of a current full-integer pixel in the distortion-compensated image by:
(i) determining the sub-integer positions of a plurality of neighboring interpolation pixels in the distortion-compensated image on the basis of the image distortion model, wherein the plurality of neighboring sub-integer interpolation pixels in the distortion-compensated image define a respective local cell and wherein the current full-integer pixel in the distortion-compensated image is located in the local cell; and
(ii) determining the pixel value of the current full-integer pixel in the distortion-compensated image on the basis of the pixel values and the sub-integer positions of the plurality of neighboring sub-integer interpolation pixels in the distortion-compensated image.

9. The electronic device (100) of claim 8, wherein the processing circuitry is configured to determine the pixel value of the current full-integer pixel in the distortion-compensated image on the basis of the pixel values and the sub-integer positions of the plurality of neighboring sub-integer interpolation pixels in the distortion-compensated image using interpolation.

10. The electronic device (100) of any one of claims 1 to 9, wherein the electronic device (100) further comprises an image capturing device.

11. A method of operating an electronic device (100), wherein the method comprises:
storing a current image in a main memory (101) of the electronic device (100), wherein the current image comprises a plurality of pixels;
storing a subset of the plurality of pixels stored in the main memory (101) in a cache memory (103a) of the electronic device (100);
successively generating a respective pixel value at a plurality of pixel positions of a distortion-compensated image on the basis of the current image;
pre-fetching from the main memory (101) the pixel values of the plurality of pixels of the current image to the cache memory (103a);
storing a first pixel position of the plurality of pixel positions of the distortion-compensated image and accumulating further pixel positions of the plurality of pixel positions of the distortion-compensated image in a buffer memory (401), in parallel to pre-fetching the pixel values of the plurality of pixels of the current image to the cache memory (103a); and
retrieving the pixel values of the plurality of pixels of the current image from the cache memory (103a) and/or the main memory (101) based on the first pixel position of the plurality of pixel positions of the distortion-compensated image and the accumulated further pixel positions for generating the respective pixel value at the first pixel position of the plurality of pixel positions of the distortion-compensated image,
wherein the method further comprises:
checking whether the pixel values for generating the respective pixel value at the first pixel position of the plurality of pixel positions of the distortion-compensated image can be retrieved from the cache memory (103a), and
if said pixel values for generating the respective pixel value at the first pixel position of the plurality of pixel positions of the distortion-compensated image cannot be retrieved from the cache memory (103a), retrieving the pixel values for generating the respective pixel value at the first pixel position of the plurality of pixel positions of the distortion-compensated image from the main memory (101); and
wherein the method further comprises: accumulating the further pixel positions of the plurality of pixel positions of the distortion-compensated image, until the pixel values for generating the respective pixel value at the first pixel position of the plurality of pixel positions of the distortion-compensated image have been stored in the cache memory (103a).

12. A computer program with a program code for performing a method according to claim 11 when the computer program runs on a computer.

13. A computer readable storage medium comprising computer program code instructions, being executable by a computer, for performing a method according to claim 11 when the computer program code instructions run on a computer.

## Patentansprüche

1. Elektronische Vorrichtung (100), die Folgendes umfasst:
einen Hauptspeicher (101) zum Speichern eines aktuellen Bildes, wobei das aktuelle Bild eine Vielzahl von Pixeln umfasst;
einen Cache-Speicher (103a) zum Speichern einer Teilmenge der Vielzahl von Pixeln, die in dem Hauptspeicher (101) gespeichert sind;
eine Verarbeitungsschaltung, die konfiguriert ist, um nacheinander einen jeweiligen Pixelwert an einer Vielzahl von Pixelpositionen eines verzerrungskompensierten Bildes auf der Grundlage des aktuellen Bildes zu erzeugen und die Pixelwerte der Vielzahl von Pixeln des aktuellen Bildes aus dem Hauptspeicher (101) in den Cache-Speicher (103a) vorabzurufen; und
einen Pufferspeicher (401), der konfiguriert ist, um eine erste Pixelposition der Vielzahl von Pixelpositionen des verzerrungskompensierten Bildes zu speichern und weitere Pixelpositionen der Vielzahl von Pixelpositionen des verzerrungskompensierten Bildes, parallel zum Vorabrufen der Pixelwerte der Vielzahl von Pixeln des aktuellen Bildes in den Cache-Speicher (103a), zu akkumulieren;
wobei die Verarbeitungsschaltung ferner konfiguriert ist, um die Pixelwerte der Vielzahl von Pixeln des aktuellen Bildes aus dem Cache-Speicher (103a) und/oder dem Hauptspeicher (101) basierend auf der ersten Pixelposition der Vielzahl von Pixelpositionen des verzerrungskompensierten Bildes und der akkumulierten weiteren Pixelpositionen zum Erzeugen des jeweiligen Pixelwerts an der ersten Pixelposition der Vielzahl von Pixelpositionen des verzerrungskompensierten Bildes abzurufen,
wobei die Verarbeitungsschaltung konfiguriert ist zum:
Überprüfen, ob die Pixelwerte zum Erzeugen des jeweiligen Pixelwerts an der ersten Pixelposition der Vielzahl von Pixelpositionen des verzerrungskompensierten Bildes aus dem Cache-Speicher (103a) abgerufen werden können, und
falls die Pixelwerte zum Erzeugen des jeweiligen Pixelwerts an der ersten Pixelposition der Vielzahl von Pixelpositionen des verzerrungskompensierten Bildes nicht aus dem Cache-Speicher (103a) abgerufen werden können, Abrufen der Pixelwerte zum Erzeugen des jeweiligen Pixelwerts an der ersten Pixelposition der Vielzahl von Pixelpositionen des verzerrungskompensierten Bildes aus dem Hauptspeicher (101);
wobei der Pufferspeicher (401) konfiguriert ist, um die weiteren Pixelpositionen der Vielzahl von Pixelpositionen des verzerrungskompensierten Bildes zu akkumulieren, bis die Pixelwerte zum Erzeugen des jeweiligen Pixelwerts an der ersten Pixelposition der Vielzahl von Pixelpositionen des verzerrungskompensierten Bildes in dem Cache-Speicher (103a) gespeichert wurden.

2. Elektronische Vorrichtung (100) nach Anspruch 1, wobei der Pufferspeicher (401) konfiguriert ist, um die erste Pixelposition und die weiteren in dem Pufferspeicher (401) gespeicherten Pixelpositionen der Verarbeitungsschaltung bereitzustellen, sobald die Werte zum Erzeugen des jeweiligen Pixelwerts an der ersten Pixelposition der Vielzahl von Pixelpositionen des verzerrungskompensierten Bildes in dem Cache-Speicher (103a) gespeichert wurden.

3. Elektronische Vorrichtung (100) nach Anspruch 1 oder 2, wobei die elektronische Vorrichtung (100) einen weiteren Pufferspeicher (501) umfasst, der konfiguriert ist, um die aus dem Hauptspeicher (101) vorab abgerufenen Pixelwerte zu speichern, und wobei die Verarbeitungsschaltung konfiguriert ist, um zu überprüfen, ob sich ein aus dem Hauptspeicher (101) vorabgerufener Pixelwert in dem weiteren Pufferspeicher (501) oder in dem Cache-Speicher (103a) befindet.

4. Elektronische Vorrichtung (100) nach Anspruch 3, wobei die Verarbeitungsschaltung konfiguriert ist, um den Inhalt des weiteren Pufferspeichers (501) in den Cache-Speicher (103a) zu übertragen, falls sich der vorabgerufene Pixelwert in dem weiteren Pufferspeicher (501) befindet.

5. Elektronische Vorrichtung (100) nach Anspruch 3 oder 4, wobei
der Cache-Speicher (103a) und der weitere Pufferspeicher (501) logische Speicher sind, die auf einem physikalischen Speicher implementiert sind,
die Verarbeitungseinheit konfiguriert ist zum
Zugreifen auf den Cache-Speicher (103a) und den weiteren Pufferspeicher (501) unter Verwendung von Zeigern, und
Übertragen des Inhalts des weiteren Pufferspeichers (501) in den Cache-Speicher (103a) durch Austauschen von Zeigern.

6. Elektronische Vorrichtung (100) nach einem der Ansprüche 1 bis 5, wobei
die Vielzahl der in dem aktuellen Bild eingeschlossenen Pixel eine Vielzahl von Unterstützungspixeln einschließt,
die jeweiligen Pixel auf der Grundlage eines Bildverzerrungsmodells durch Interpolieren der Pixelwerte der Vielzahl von Pixeln des aktuellen Bildes erzeugt werden, wobei das Bildverzerrungsmodell für jedes der Vielzahl von Unterstützungspixeln eine Abbildung zwischen einer Position in dem aktuellen Bild und einer Position in dem verzerrungskompensierten Bild definiert; und
ein aktuelles ganzzahliges Pixel in dem aktuellen Bild innerhalb einer globalen Zelle liegt, die durch eine Vielzahl aktueller Unterstützungspixel in dem aktuellen Bild definiert ist, und
die Verarbeitungsschaltung konfiguriert ist, um ein entsprechendes aktuelles teilzahliges Pixel in dem verzerrungskompensierten Bild zu erzeugen, durch:
(i) Bestimmen der jeweiligen teilzahligen Positionen der Vielzahl aktueller Unterstützungspixel in dem aktuellen Bild; und
(ii) Bestimmen der teilzahligen Position des entsprechenden aktuellen Pixels im verzerrungskompensierten Bild auf der Grundlage des Bildverzerrungsmodells und der jeweiligen teilzahligen Positionen der Vielzahl der aktuellen Unterstützungspixel in dem aktuellen Bild.

7. Elektronische Vorrichtung (100) nach Anspruch 6, wobei die Verarbeitungsschaltung konfiguriert ist, um die teilzahlige Position des entsprechenden aktuellen Pixels in dem verzerrungskompensierten Bild auf der Grundlage des Bildverzerrungsmodells und der jeweiligen teilzahligen Positionen der Vielzahl der aktuellen Unterstützungspixel in dem aktuellen Bild und des Bildverzerrungsmodells unter Verwendung von Interpolation zu bestimmen.

8. Elektronische Vorrichtung (100) nach Anspruch 6 oder 7, wobei die Verarbeitungsschaltung konfiguriert ist, um nacheinander den Pixelwert eines aktuellen ganzzahligen Pixels in dem verzerrungskompensierten Bild zu erzeugen durch:
(i) Bestimmen der teilzahligen Positionen einer Vielzahl von benachbarten Interpolationspixeln in dem verzerrungskompensierten Bild auf der Grundlage des Bildverzerrungsmodells, wobei die Vielzahl von benachbarten teilzahligen Interpolationspixeln in dem verzerrungskompensierten Bild eine jeweilige lokale Zelle definieren und wobei sich das aktuelle ganzzahlige Pixel in dem verzerrungskompensierten Bild in der lokalen Zelle befindet; und
(ii) Bestimmen des Pixelwerts des aktuellen ganzzahligen Pixels in dem verzerrungskompensierten Bild auf der Grundlage der Pixelwerte und der teilzahligen Positionen der Vielzahl benachbarter teilzahliger Interpolationspixel in dem verzerrungskompensierten Bild.

9. Elektronische Vorrichtung (100) nach Anspruch 8, wobei die Verarbeitungsschaltung konfiguriert ist, um den Pixelwert des aktuellen ganzzahligen Pixels in dem verzerrungskompensierten Bild auf der Grundlage der Pixelwerte und der teilzahligen Positionen der Vielzahl benachbarter teilzahliger Interpolationspixel in dem verzerrungskompensierten Bild unter Verwendung einer Interpolation zu bestimmen.

10. Elektronische Vorrichtung (100) nach einem der Ansprüche 1 bis 9, wobei die elektronische Vorrichtung (100) ferner eine Bildaufnahmevorrichtung umfasst.

11. Verfahren zum Betreiben einer elektronischen Vorrichtung (100), wobei das Verfahren Folgendes umfasst:
Speichern eines aktuellen Bildes in einem Hauptspeicher (101) der elektronischen Vorrichtung (100), wobei das aktuelle Bild eine Vielzahl von Pixeln umfasst;
Speichern einer Teilmenge der Vielzahl von Pixeln, die in dem Hauptspeicher (101) gespeichert sind, in einem Cache-Speicher (103a) der elektronischen Vorrichtung (100);
nacheinander Erzeugen eines jeweiligen Pixelwerts an einer Vielzahl von Pixelpositionen eines verzerrungskompensierten Bildes auf der Grundlage des aktuellen Bildes;
Vorabrufen der Pixelwerte der Vielzahl von Pixeln des aktuellen Bildes aus dem Hauptspeicher (101) in den Cache-Speicher (103a);
Speichern einer ersten Pixelposition der Vielzahl von Pixelpositionen des verzerrungskompensierten Bildes und Akkumulieren weiterer Pixelpositionen der Vielzahl von Pixelpositionen des verzerrungskompensierten Bildes in einem Pufferspeicher (401), parallel zum Vorabrufen der Pixelwerte der Vielzahl von Pixeln des aktuellen Bildes in den Cache-Speicher (103a); und
Abrufen der Pixelwerte der Vielzahl von Pixeln des aktuellen Bildes aus dem Cache-Speicher (103a) und/oder dem Hauptspeicher (101) basierend auf der ersten Pixelposition der Vielzahl von Pixelpositionen des verzerrungskompensierten Bildes und den akkumulierten weiteren Pixelpositionen, um den jeweiligen Pixelwert an der ersten Pixelposition der Vielzahl von Pixelpositionen des verzerrungskompensierten Bildes zu erzeugen,
wobei das Verfahren ferner umfasst:
Überprüfen, ob die Pixelwerte zum Erzeugen des jeweiligen Pixelwerts an der ersten Pixelposition der Vielzahl von Pixelpositionen des verzerrungskompensierten Bildes aus dem Cache-Speicher (103a) abgerufen werden können, und
falls die Pixelwerte zum Erzeugen des jeweiligen Pixelwerts an der ersten Pixelposition der Vielzahl von Pixelpositionen des verzerrungskompensierten Bildes nicht aus dem Cache-Speicher (103a) abgerufen werden können, Abrufen der Pixelwerte zum Erzeugen des jeweiligen Pixelwerts an der ersten Pixelposition der Vielzahl von Pixelpositionen des verzerrungskompensierten Bildes aus dem Hauptspeicher (101); und
wobei das Verfahren ferner umfasst: Akkumulieren der weiteren Pixelpositionen der Vielzahl von Pixelpositionen des verzerrungskompensierten Bildes, bis die Pixelwerte zum Erzeugen des jeweiligen Pixelwerts an der ersten Pixelposition der Vielzahl von Pixelpositionen des verzerrungskompensierten Bildes in dem Cache-Speicher (103a) gespeichert wurden.

12. Computerprogramm mit einem Programmcode zum Durchführen eines Verfahrens nach Anspruch 11, wenn das Computerprogramm auf einem Computer läuft.

13. Computerlesbares Speicherungsmedium, das Computerprogrammcodeanweisungen, die durch einen Computer ausführbar sind, zum Durchführen eines Verfahrens nach Anspruch 11 umfasst, wenn die Computerprogrammcodeanweisungen auf einem Computer laufen.

## Revendications

1. Dispositif électronique (100) comprenant :
une mémoire principale (101) pour stocker une image actuelle, dans lequel l'image actuelle comprend une pluralité de pixels ;
une mémoire cache (103a) pour stocker un sous-ensemble de la pluralité de pixels stockés dans la mémoire principale (101) ;
une circuiterie de traitement configurée pour générer successivement une valeur de pixel respective au niveau d'une pluralité de positions de pixel d'une image compensée par distorsion sur la base de l'image actuelle et pour extraire au préalable de la mémoire principale (101) les valeurs de pixel de la pluralité de pixels de l'image actuelle vers la mémoire cache (103a) ; et
une mémoire tampon (401) configurée pour stocker une première position de pixel de la pluralité de positions de pixel de l'image compensée par distorsion et pour accumuler des positions de pixel supplémentaires de la pluralité de positions de pixel de l'image compensée par distorsion, parallèlement à l'extraction préalable des valeurs de pixel de la pluralité de pixels de l'image actuelle vers la mémoire cache (103a) ;
dans lequel la circuiterie de traitement est en outre configurée pour récupérer les valeurs de pixel de la pluralité de pixels de l'image actuelle de la mémoire cache (103a) et/ou de la mémoire principale (101) sur la base de la première position de pixel de la pluralité de positions de pixel de l'image compensée par distorsion et des positions de pixel supplémentaires accumulées pour générer la valeur de pixel respective au niveau de la première position de pixel de la pluralité de positions de pixel de l'image compensée par distorsion,
dans lequel la circuiterie de traitement est configurée pour :
vérifier si les valeurs de pixel pour générer la valeur de pixel respective au niveau de la première position de pixel de la pluralité de positions de pixel de l'image compensée par distorsion peuvent être récupérées de la mémoire cache (103a), et
si lesdites valeurs de pixel pour générer la valeur de pixel respective au niveau de la première position de pixel de la pluralité de positions de pixel de l'image compensée par distorsion ne peuvent être récupérées de la mémoire cache (103a), récupérer de la mémoire principale (101) les valeurs de pixel pour générer la valeur de pixel respective au niveau de la première position de pixel de la pluralité de positions de pixel de l'image compensée par distorsion ;
dans lequel la mémoire tampon (401) est configurée pour accumuler les positions de pixel supplémentaires de la pluralité de positions de pixel de l'image compensée par distorsion, jusqu'à ce que les valeurs de pixel pour générer la valeur de pixel respective au niveau de la première position de pixel de la pluralité de positions de pixel de l'image compensée par distorsion aient été stockées dans la mémoire cache (103a).

2. Dispositif électronique (100) selon la revendication 1, dans lequel la mémoire tampon (401) est configurée pour fournir la première position de pixel et les positions de pixel supplémentaires stockées dans la mémoire tampon (401) à la circuiterie de traitement, une fois que les valeurs pour générer la valeur de pixel respective au niveau de la première position de pixel de la pluralité de positions de pixel de l'image compensée par distorsion ont été stockées dans la mémoire cache (103a).

3. Dispositif électronique (100) selon la revendication 1 ou 2, dans lequel le dispositif électronique (100) comprend une mémoire tampon supplémentaire (501) configurée pour stocker les valeurs de pixel extraites au préalable de la mémoire principale (101) et dans lequel la circuiterie de traitement est configurée pour vérifier si une valeur de pixel extraite au préalable de la mémoire principale (101) se trouve dans la mémoire tampon supplémentaire (501) ou dans la mémoire cache (103a).

4. Dispositif électronique (100) selon la revendication 3, dans lequel la circuiterie de traitement est configurée pour transférer un contenu de la mémoire tampon supplémentaire (501) à la mémoire cache (103a), si la valeur de pixel extraite au préalable se trouve dans la mémoire tampon supplémentaire (501).

5. Dispositif électronique (100) selon la revendication 3 ou 4, dans lequel
la mémoire cache (103a) et la mémoire tampon supplémentaire (501) sont des mémoires logiques mises en œuvre sur une mémoire physique,
la circuiterie de traitement est configurée pour
accéder à la mémoire cache (103a) et à la mémoire tampon supplémentaire (501) à l'aide de pointeurs, et
transférer le contenu de la mémoire tampon supplémentaire (501) à la mémoire cache (103a) par échange de pointeurs.

6. Dispositif électronique (100) selon l'une quelconque des revendications 1 à 5, dans lequel
la pluralité de pixels inclus dans l'image actuelle comporte une pluralité de pixels de support,
les pixels respectifs sont générés sur la base d'un modèle de distorsion d'image par interpolation des valeurs de pixel de la pluralité de pixels de l'image actuelle, dans lequel le modèle de distorsion d'image définit pour chacun de la pluralité de pixels de support une correspondance entre une position dans l'image actuelle et une position dans l'image compensée par distorsion ; et
un pixel entier complet actuel dans l'image actuelle se situe à l'intérieur d'une cellule globale définie par une pluralité de pixels de support actuels dans l'image actuelle et la circuiterie de traitement est configurée pour générer un pixel sous-entier actuel correspondant dans l'image compensée par distorsion en :
(i) déterminant les positions de sous-entier respectives de la pluralité de pixels de support actuels dans l'image actuelle ; et
(ii) déterminant la position de sous-entier du pixel actuel correspondant dans l'image compensée par distorsion sur la base du modèle de distorsion d'image et des positions de sous-entier respectives de la pluralité de pixels de support actuels dans l'image actuelle.

7. Dispositif électronique (100) selon la revendication 6, dans lequel la circuiterie de traitement est configurée pour déterminer la position de sous-entier du pixel actuel correspondant dans l'image compensée par distorsion sur la base du modèle de distorsion d'image et des positions de sous-entier respectives de la pluralité de pixels de support actuels dans l'image actuelle et le modèle de distorsion d'image à l'aide d'une interpolation.

8. Dispositif électronique (100) selon la revendication 6 ou 7, dans lequel la circuiterie de traitement est configurée pour générer successivement la valeur de pixel d'un pixel entier complet actuel dans l'image compensée par distorsion en :
(i) déterminant les positions de sous-entier d'une pluralité de pixels d'interpolation voisins dans l'image compensée par distorsion sur la base du modèle de distorsion d'image, dans lequel la pluralité de pixels d'interpolation sous-entiers voisins dans l'image compensée par distorsion définit une cellule locale respective et dans lequel le pixel entier complet actuel dans l'image compensée par distorsion se trouve dans la cellule locale ; et
(ii) déterminant la valeur de pixel du pixel entier complet actuel dans l'image compensée par distorsion sur la base des valeurs de pixel et des positions de sous-entier de la pluralité de pixels d'interpolation sous-entiers voisins dans l'image compensée par distorsion.

9. Dispositif électronique (100) selon la revendication 8, dans lequel la circuiterie de traitement est configurée pour déterminer la valeur de pixel du pixel entier complet actuel dans l'image compensée par distorsion sur la base des valeurs de pixel et des positions de sous-entier de la pluralité de pixels d'interpolation sous-entiers voisins dans l'image compensée par distorsion à l'aide d'une interpolation.

10. Dispositif électronique (100) selon l'une quelconque des revendications 1 à 9, dans lequel le dispositif électronique (100) comprend en outre un dispositif de capture d'image.

11. Procédé permettant de faire fonctionner un dispositif électronique (100), dans lequel le procédé comprend :
le stockage d'une image actuelle dans une mémoire principale (101) du dispositif électronique (100), dans lequel l'image actuelle comprend une pluralité de pixels ;
le stockage d'un sous-ensemble de la pluralité de pixels stockés dans la mémoire principale (101) dans une mémoire cache (103a) du dispositif électronique (100) ;
la génération successive d'une valeur de pixel respective au niveau d'une pluralité de positions de pixel d'une image compensée par distorsion sur la base de l'image actuelle ;
l'extraction préalable de la mémoire principale (101) des valeurs de pixel de la pluralité de pixels de l'image actuelle vers la mémoire cache (103a) ;
le stockage d'une première position de pixel de la pluralité de positions de pixel de l'image compensée par distorsion et l'accumulation de positions de pixel supplémentaires de la pluralité de positions de pixel de l'image compensée par distorsion dans une mémoire tampon (401), parallèlement à l'extraction préalable des valeurs de pixel de la pluralité de pixels de l'image actuelle vers la mémoire cache (103a) ; et
la récupération des valeurs de pixel de la pluralité de pixels de l'image actuelle de la mémoire cache (103a) et/ou de la mémoire principale (101) sur la base de la première position de pixel de la pluralité de positions de pixel de l'image compensée par distorsion et des positions de pixel supplémentaires accumulées pour générer la valeur de pixel respective au niveau de la première position de pixel de la pluralité de positions de pixel de l'image compensée par distorsion,
dans lequel le procédé comprend en outre :
le fait de vérifier si les valeurs de pixel pour générer la valeur de pixel respective au niveau de la première position de pixel de la pluralité de positions de pixel de l'image compensée par distorsion peuvent être récupérées de la mémoire cache (103a), et si lesdites valeurs de pixel pour générer la valeur de pixel respective au niveau de la première position de pixel de la pluralité de positions de pixel de l'image compensée par distorsion ne peuvent pas être récupérées de la mémoire cache (103a), la récupération de la mémoire principale (101) des valeurs de pixel pour générer la valeur de pixel respective au niveau de la première position de pixel de la pluralité de positions de pixel de l'image compensée par distorsion ; et
dans lequel le procédé comprend en outre : l'accumulation des positions de pixel supplémentaires de la pluralité de positions de pixel de l'image compensée par distorsion, jusqu'à ce que les valeurs de pixel pour générer la valeur de pixel respective au niveau de la première position de pixel de la pluralité de positions de pixel de l'image compensée par distorsion aient été stockées dans la mémoire cache (103a).

12. Programme informatique doté d'un code de programme permettant de réaliser un procédé selon la revendication 11, lorsque le programme informatique s'exécute sur un ordinateur.

13. Support de stockage lisible par ordinateur comprenant des instructions de code de programme informatique, pouvant être exécutées par un ordinateur, pour réaliser un procédé selon la revendication 11 lorsque les instructions de code de programme informatique sont exécutées sur un ordinateur.
